# EUROPÄISCHE PATENTANMELDUNG

(11) **EP 1 024 040 A2**
(43) Veröffentlichungstag der Anmeldung: **02.08.2000**
(21) Anmeldenummer: 99125604.1
(22) Anmeldetag: 22.12.1999
(51) Int. Cl.: B60H 1/00

(54) **Regelung einer bedienbaren Anlage, insbesondere einer Heiz- und/oder Klimaanlage**

(30) Priorität: 29.01.1999 DE 19903556
(71) Anmelder: DaimlerChrysler AG, 70567 Stuttgart (DE)
(72) Erfinder: Holdgrewe, Kai, 71409 Schwaikheim (DE); Reitter, Christian, 70376 Stuttgart (DE)

(57) **Zusammenfassung**

Die Erfindung betrifft eine Regelung einer bedienbaren Anlage, insbesondere einer Heiz- und/oder Klimaanlage, wobei ein Bediener über eine Bedieneinheit Bedieneingriffe ausführen kann, die zu verschiedenen Einstellungen der Anlage führen und wobei in eine Steuereinheit verschiedene zusätzliche Parameter eingelesen und verarbeitet werden.
Erfindungsgemäß ist vorgesehen, daß
■ eine Bediener-Matrix (4) definiert wird, in welcher die Zeilen und Spalten verschiedene Regelgrößen wie Temperatur und Gebläsestufe bedeuten, deren Größen über die Bedieneingriffe auswählbar sind
■ jede Matrixzelle von wenigstens einem Zustandsvektor belegt ist, wobei in jedem Zustandsvektor Randbedingungen wie Außentemperatur, Innentemperatur gespeichert sind
■ ein Bedieneingriff die Bestimmung eines Zustandsvektors bewirkt, welcher in der durch den Bedieneingriff bestimmten Matrixzelle abgelegt wird
■ die Regelung der Anlage (5) durch Vergleich des aktuellen Zustandsvektors mit den in der Bediener-Matrix befindlichen Zustandsvektoren erfolgt, wobei die Zelle mit der größten Übereinstimmung mit dem aktuellen Zustandsvektor ermittelt wird und die zu dieser Matrixzelle gehörenden Regelgrößen eingestellt werden.

## Beschreibung

Die Erfindung betrifft eine Regelung einer durch Bedienung einstellbaren Anlage, insbesondere einer Heiz- und/oder Klimaanlage gemäß den gattungsbildenden Merkmalen des Anspruchs 1.

Eine gattungsgemäße Regelung einer durch Bedienung einstellbaren Heiz- und/oder Klimaanlage ist aus der DE 4426732 A1 bekannt. Die Klimaanlage ist für einen fest vorgegebenen Automatikbetrieb eingerichtet, der durch einen individuell einprogrammierbaren Automatikbetrieb übersteuerbar oder überspielbar ist. Der Fahrzeuginsasse nimmt eine für sein Komfortempfinden optimale manuelle Einstellung von Betätigungssignalen vor und diese Betätigungssignale werden in der Klimaanlage bei Vorliegen der zugeordneten Faktoren oder Parameterwerte immer wieder abgerufen, bis der Fahrzeuginsasse eine Änderung der manuellen Einstellung vornimmt oder auf Automatikbetrieb zurückschaltet. Dem Speicher werden für den Individualbetrieb auch bei Erzeugung der jeweiligen Betätigungssignale vorliegende, das Komfortempfinden von Fahrzeuginsassen beeinflussende Parameterwerte, wie Außentemperatur, Feuchtigkeit, Tageszeit, zur Speicherung zugeführt. Es sind Mittel zum Abruf von gespeicherten Betätigungssignalen nur bei erneutem Auftreten der zugeordneten Parameterwerte vorgesehen.

Bei dieser Art einer Regelung einer bedienbaren Anlage ist von Nachteil, daß die persönlichen Vorlieben und Wünsche des Benutzers nicht ausreichend berücksichtigt werden. So erfolgt eine automatische Regelung erst bei erneutem Auftreten von zugeordneten Parametern. Bei kleineren Abweichungen der Parameter ist die Regelung nicht flexibel genug, um die Anlage optimal einzuregeln. Dies hat zur Folge, daß eine Adaption an den Bediener nicht optimal erfolgt, so daß die automatische Regelung der Anlage auch nicht optimal erfolgt. Der Bediener wird daher zu mehr Bedieneingriffen gezwungen.

Der Erfindung liegt daher die Aufgabe zugrunde, eine Regelung für eine gattungsgemäße bedienbare Anlage derart weiterzubilden, daß die bedienbare Anlage nach den individuellen Wünschen und Vorlieben des Bedieners flexibler und genauer betrieben werden kann.

Erfindungsgemäß wird die Aufgabe durch die Merkmale des Anspruchs 1 gelöst. Vorteilhafte Aus- und Weiterbildungen des Erfindungsgegenstandes sind durch die Merkmale der Unteransprüche gekennzeichnet.

Ein wesentlicher Vorteil dieser Ausgestaltungen liegt darin, daß die vom Bediener üblicherweise bevorzugten Einstellungen der Anlage genauer ausführbar sind und damit zu einer optimaleren Einstellung der Anlage führen. Der Bediener wird weniger Bedieneingriffe durchführen. Die Regelung arbeitet schneller und genauer, was für den Bediener verbesserten Komfort bedeutet.

Die Erfindung wird anhand eines Ausführungsbeispieles in Verbindung mit einer Figurenbeschreibung näher erläutert. Es zeigt
- Fig. 1: ein Flußdiagramm zum Ablauf des Adaptionsvorgangs,
- Fig. 2: eine Bediener-Matrix am Beispiel zweier einstellbarer Regelgrößen, sowie
- Fig. 3: eine mögliche Verteilung der Zustandsvektoren in der Bediener-Matrix.

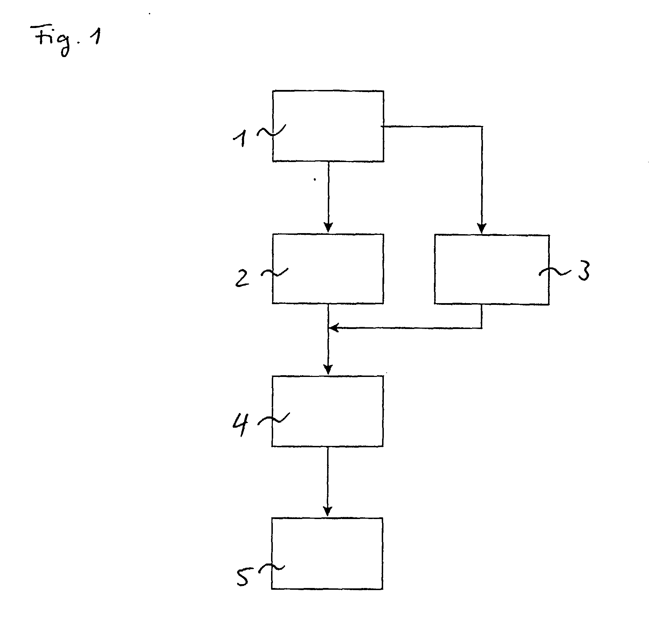

In Fig. 1 ist ein Flußdiagramm zum Ablauf des Adaptionsvorganges dargestellt. Als Ausführungsbeispiel ist als bedienbare Anlage eine Heiz- und/oder Klimaanlage gewählt. Erfolgt in 1 ein neuer Bedieneingriff, wird in 2 ein Zustandsvektor bestimmt, der die gerade herrschende Außentemperatur, Innentemperatur und andere Regelgrößen beschreibt. Erfolgt in einer vorbestimmten Zeit wie beispielsweise alle 10 min. kein neuer Bedieneingriff, so erfolgt in 3 trotzdem nach dieser Zeit eine neue Bestimmung des Zustandsvektors. Die bestimmten Zustandsvektoren werden dann in 4 in eine Bediener-Matrix chronologisch eingeordnet, wobei die alten Werte der Zustandsvektoren gelöscht werden. Die Zeilen und Spalten der Bediener-Matrix bedeuten verschiedene durch den Bedieneingriff einstellbare Regelgrößen wie Temperatur und Gebläsestufe. In 5 erfolgt die automatische Regelung durch Vergleich des aktuellen Zustandsvektors mit den Zustandsvektoren in der Bediener-Matrix, wobei der Zustandsvektor mit der größten Übereinstimmung ermittelt wird und die zu diesem Zustandsvektor gehörenden Regelgrößen eingestellt werden. Die Einstellungen der Anlage erfolgen dann entsprechend den Parametern des Zustandsvektors und den Regelgrößen des ausgewählten Bedieneingriffes.

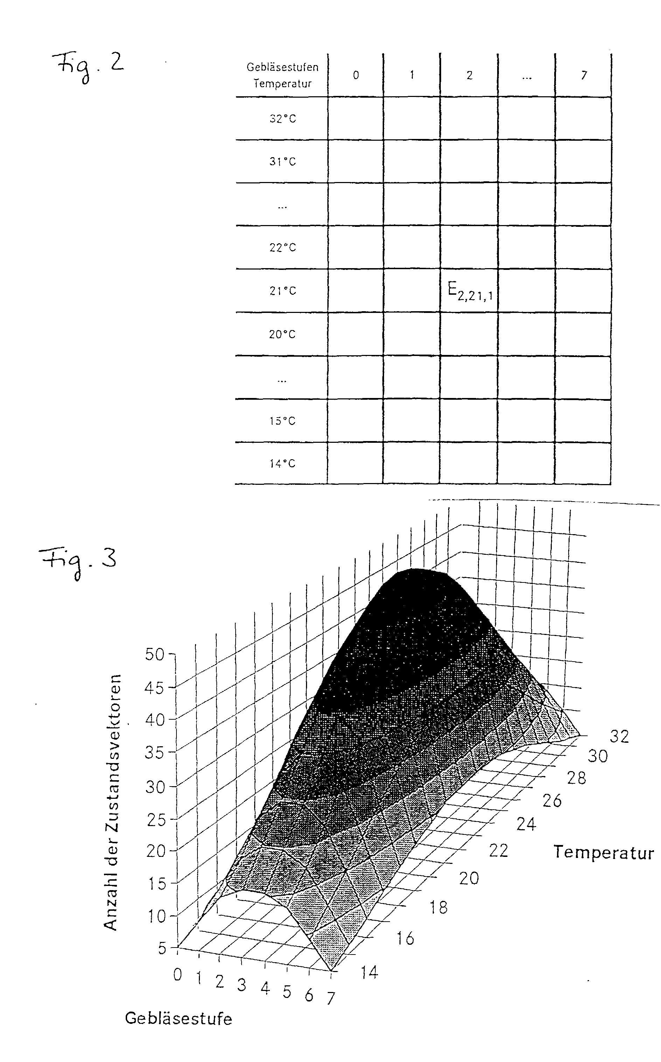

Fig. 2 zeigt eine Bediener-Matrix am Beispiel zweier einstellbarer Regelgrößen, gewünschte Innenraumtemperatur und Gebläsestufe. Der Bediener kann als Bedieneingriff die Temperatur und die Gebläsestufe auswählen. Diese beiden Regelgrößen bilden die Zeile und Spalte der Bedienermatrix. Jede Matrixzelle ist von wenigstens einem Zustandsvektor E belegt, wobei in jedem Zustandsvektor Randbedingungen wie Außentemperatur, Innentemperatur und andere gespeichert sind. Eine Bediener-Matrix kann mehrere Dimensionen haben, wenn mehrere vom Bediener einstellbare Regelgrößen vorgesehen sind. Jede dieser Matrix-Zellen kann aber mit mehreren Zustandsvektoren besetzt sein. Je größer die Anzahl der Zustandsvektoren in einer Matrix-Zelle, desto genauer kann die Einstellung der Anlage erfolgen.

In Fig. 3 ist eine mögliche Verteilung der Zustandsvektoren in der wie in Fig. 2 dargestellten Bediener-Matrix gezeigt. Bei mittleren Temperaturen von 22°C und einer mittleren Gebläsestufe von 3 sind die Matrixzellen mit der größten Anzahl von Zustandsvektoren besetzt. In einer dieser Matrix-Zellen werden viele sehr naheliegende Zustände erfaßt, die alle zum gleichen Bedieneingriff gehören. Hier wird erwartet, daß die Anlage am genauesten arbeitet. An den Rändern der Matrix-Zelle, was einer extremen Temperatur und extremer Gebläsestufe entspricht, sind nur wenige Zustandsvektoren in der Matrix-Zelle. Solche Bedieneingriffe werden vom Bediener mit kleiner Wahrscheinlichkeit getätigt. Es ist unwahrscheinlich, daß der Bediener eine Innenraumtemperatur von 14°C wünscht. Aus diesem Grund sind hier wenige Zustandsvektoren vorgesehen.

## Patentansprüche

1. Regelung einer bedienbaren Anlage, insbesondere einer Heiz-und/oder Klimaanlage, wobei ein Bediener über eine Bedieneinheit Bedieneingriffe ausführen kann, die zu verschiedenen Einstellungen der Anlage führen und wobei in eine Steuereinheit verschiedene zusätzliche Parameter eingelesen und verarbeitet werden,
**dadurch gekennzeichnet,**
daß
■ eine Bediener-Matrix definiert wird, in welcher die Zeilen und Spalten verschiedene Regelgrößen wie Temperatur und Gebläsestufe bedeuten, deren Größen über die Bedieneingriffe auswählbar sind
■ jede Matrixzelle von wenigstens einem Zustandsvektor belegt ist, wobei in jedem Zustandsvektor Randbedingungen wie Außentemperatur, Innentemperatur gespeichert sind
■ ein Bedieneingriff die Bestimmung eines Zustandsvektors bewirkt, welcher in der durch den Bedieneingriff bestimmten Matrixzelle abgelegt wird
■ die Regelung der Anlage durch Vergleich des aktuellen Zustandsvektors mit den in der Bediener-Matrix befindlichen Zustandsvektoren erfolgt, wobei die Zelle mit der größten Übereinstimmung mit dem aktuellen Zustandsvektor ermittelt wird und die zu dieser Matrixzelle gehörenden Regelgrößen eingestellt werden.

2. Regelung einer bedienbaren Anlage nach Anspruch 1,
**dadurch gekennzeichnet,**
daß die Zustandsvektoren in der Matrix chronologisch abgelegt werden, wobei die alten Werte gelöscht werden.

3. Regelung einer bedienbaren Anlage nach den Ansprüchen 1 und 2,
**dadurch gekennzeichnet,**
daß, wenn kein neuer Bedieneingriff erfolgt, in vorgegebenen Zeitabständen automatisch ein neuer Zustandsvektor in die gerade betrachtete Matrixzelle abgelegt wird.
